(19) Europäisches Patentamt
European Patent Office
Office européen des brevets

(11) **EP 4 037 200 A1**

(12) **EUROPEAN PATENT APPLICATION**

(43) Date of publication:
**03.08.2022  Bulletin 2022/31**

(51) International Patent Classification (IPC):
**H04B 7/08** *(2006.01)*        **H04B 1/40** *(2015.01)*

(21) Application number: **22153955.4**

(52) Cooperative Patent Classification (CPC):
**H04B 1/40; H04B 7/0857**

(22) Date of filing: **28.01.2022**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **28.01.2021  CN 202110117403**

(71) Applicant: **Spreadtrum Communications (Shanghai) Co., Ltd.**
**Shanghai 201203 (CN)**

(72) Inventors:
• **SU, Jingjing**
  **Pudong, 201203 (CN)**
• **ZHOU, Jie**
  **Pudong, 201203 (CN)**
• **LUO, Liyun**
  **Pudong, 201203 (CN)**
• **LI, Kai**
  **Pudong, 201203 (CN)**

(74) Representative: **advotec.**
**Patent- und Rechtsanwaltspartnerschaft**
**Tappe mbB**
**Widenmayerstraße 4**
**80538 München (DE)**

(54) **METHOD AND APPARATUS FOR RECEIVING/TRANSMITTING BLUETOOTH SIGNAL, ELECTRONIC CHIP, AND ELECTRONIC DEVICE**

(57)     Provided is a method and apparatus for receiving/transmitting Bluetooth signal, an electronic chip, and an electronic device. The method for receiving Bluetooth signal includes: obtaining a plurality of Bluetooth signals received by a plurality of receive antennas; and converting the plurality of Bluetooth signals into a single received Bluetooth signal based on a preset received-signal conversion strategy. The received-signal conversion strategy corresponds to a signal quality requirement of the received Bluetooth signal. The method for transmitting Bluetooth signal includes: transmitting a plurality of to-be-transmitted Bluetooth signals by using a plurality of transmit antennas based on a preset to-be-transmitted-signal allocation strategy. The to-be-transmitted-signal allocation strategy corresponds to a signal quality requirement of a received Bluetooth signal. The received Bluetooth signal is a received signal calculated by beamforming the plurality of to-be-transmitted Bluetooth signals transmitted by the plurality of transmit antennas.

FIG. 1

**Description**

**TECHNICAL FIELD**

The present disclosure relates to the field of communication technologies, and in particular, to a method and apparatus for receiving/transmitting Bluetooth signal, an electronic chip, and an electronic device.

**BACKGROUND**

Bluetooth communication solution is a common communication solution in current communication application scenarios. As a short-range radio technology, the Bluetooth technology can effectively simplify communication between mobile communication terminal devices such as palmtop computers, laptop computers and mobile phones, and can also successfully simplify communication between these devices and the Internet. This makes data transmission between these modern communication devices and the Internet rapider and more efficient, and provides more possibilities for wireless communication.

In the related Bluetooth communication scenarios, the transmitting and receiving quality of a Bluetooth signal is affected by many factors such as a transmission distance, transmit power, and signal interference. Therefore, in order to improve the transmitting and receiving quality of the Bluetooth signal, an existing Bluetooth signal receiving/transmitting mode needs to be optimized.

**SUMMARY**

To improve transmitting and receiving quality of a Bluetooth signal, the present disclosure provides a method and apparatus for receiving/transmitting Bluetooth signal, an electronic chip, and an electronic device. The present disclosure further provides a non-transitory computer-readable storage medium.

According to a first aspect, the present disclosure provides a method for receiving Bluetooth signal, including: obtaining a plurality of Bluetooth signals received by a plurality of receive antennas; and converting the plurality of Bluetooth signals into a single received Bluetooth signal based on a preset received-signal conversion strategy. The received-signal conversion strategy corresponds to a signal quality requirement of the received Bluetooth signal.

In one or more embodiments, the signal quality requirement of the received Bluetooth signal includes optimizing a signal-noise ratio (SNR) of the received Bluetooth signal. The converting the plurality of Bluetooth signals into a single received Bluetooth signal according to a preset received-signal conversion strategy includes: obtaining the received Bluetooth signal by performing maximum ratio combining (MRC) to the plurality of Bluetooth signals. In the MRC, a receive antenna i in the plurality of receive antennas corresponds to a channel $h_i$, and a combining weight $u_i$ corresponding to the receive antenna i is calculated based on $h_i$ to optimize the SNR of the received Bluetooth signal, where i = 1, 2, ..., M, and M represents a quantity of receive antennas.

In one or more embodiments, the signal quality requirement of the received Bluetooth signal includes selecting a Bluetooth signal receiving channel having optimal channel quality. The converting the plurality of Bluetooth signals into a single received Bluetooth signal based on a preset received-signal conversion strategy includes: selecting one of the plurality of Bluetooth signals as the received Bluetooth signal based on measured channel values of the plurality of Bluetooth signals. The measured channel values each include a received signal strength indicator (RSSI) or reference signal received power (RSRP).

According to a second aspect, the present disclosure provides a method for transmitting Bluetooth signal, including: transmitting a plurality of to-be-transmitted Bluetooth signals by using a plurality of transmit antennas based on a preset to-be-transmitted-signal allocation strategy. The to-be-transmitted-signal allocation strategy corresponds to a signal quality requirement of a received Bluetooth signal. The received Bluetooth signal is a received signal calculated by beamforming the plurality of to-be-transmitted Bluetooth signals transmitted by the plurality of transmit antennas.

In one or more embodiments, the signal quality requirement of the received Bluetooth signal includes optimizing an SNR of the received Bluetooth signal. The transmitting a plurality of to-be-transmitted Bluetooth signals by using a plurality of transmit antennas based on a preset to-be-transmitted-signal allocation strategy includes: configuring a transmit antenna i in the plurality of transmit antennas to transmit the plurality of to-be-transmitted Bluetooth signals based on a power allocation weight $v_i$, where i = 1, 2, ..., N, and N represents a quantity of transmit antennas, and $V_i$ represents a parameter calculated based on a channel $h_i$ corresponding to the transmit antenna i.

In one or more embodiments, the signal quality requirement of the received Bluetooth signal includes optimizing a channel capacity of the received Bluetooth signal. The transmitting a plurality of to-be-transmitted Bluetooth signals by using a plurality of transmit antennas based on a preset to-be-transmitted-signal allocation strategy includes: configuring the plurality of transmit antennas to transmit the plurality of to-be-transmitted Bluetooth signals based on a power allocation matrix $\Lambda_{\boldsymbol{Q}}$. The power allocation matrix $\Lambda_{\boldsymbol{Q}}$ represents a parameter calculated based on a covariance matrix

*Q* of the received Bluetooth signal.

According to a third aspect, the present disclosure provides an apparatus for receiving Bluetooth signal, including: at least one processor; and a memory configured to store instructions executable by the at least one processor. The instructions cause the at least one processor to: obtain a plurality of Bluetooth signals received by a plurality of receive antennas; and convert the plurality of Bluetooth signals into a single received Bluetooth signal based on a preset received-signal conversion strategy. The received-signal conversion strategy corresponds to a signal quality requirement of the received Bluetooth signal.

According to a fourth aspect, the present disclosure provides an apparatus for receiving Bluetooth signal, including: at least one processor; and a memory configured to store instructions executable by the at least one processor. The instructions cause the at least one processor to transmit, by a plurality of transmit antennas, a plurality of to-be-transmitted Bluetooth signals by configuring the plurality of transmit antennas based on a preset to-be-transmitted-signal allocation strategy. The to-be-transmitted-signal allocation strategy corresponds to a signal quality requirement of a received Bluetooth signal. The received Bluetooth signal is a received signal calculated by beamforming the plurality of to-be-transmitted Bluetooth signals transmitted by the plurality of transmit antennas.

According to a fifth aspect, the present disclosure provides an electronic chip, at least one processor; and a memory configured to store instructions executable by the at least one processor. When the instructions are executed by the at least one processor, the electronic chip is triggered to execute the method described in the first aspect.

According to a sixth aspect, the present disclosure provides an electronic chip, at least one processor; and a memory configured to store instructions executable by the at least one processor. When the instructions are executed by the at least one processor, the electronic chip is triggered to execute the method described in the second aspect.

According to a seventh aspect, the present disclosure provides an electronic device, the electronic device includes a plurality of receive antennas, a memory configured to store computer programming instructions, and at least one processor configured to execute the programming instructions. When the computer program instructions are executed by the at least one processor, the electronic device is triggered to perform the method described in the first aspect.

According to an eighth aspect, the present disclosure provides an electronic device, the electronic device includes a plurality of transmit antennas, a memory configured to store computer programming instructions, and at least one processor configured to execute the programming instructions. When the computer program instructions are executed by the at least one processor, the electronic device is triggered to perform the method described in the second aspect.

According to a ninth aspect, the present disclosure provides a non-transitory computer-readable storage medium, the computer-readable storage medium stores computer program instructions thereon, the computer program instructions, when being executed by at least one processor, are configured to perform the methods described in the embodiments of the present disclosure.

## BRIEF DESCRIPTION OF DRAWINGS

FIG. 1 is a flowchart of a method for receiving Bluetooth signal according to an embodiment of the present disclosure;
FIG. 2 is a schematic diagram showing an application scenario of receiving Bluetooth signal according to an embodiment of the present disclosure;
FIG. 3 is a flowchart of a method for transmitting Bluetooth signal according to an embodiment of the present disclosure; and
FIG. 4 is a schematic diagram showing an application scenario of transmitting Bluetooth signal according to an embodiment of the present disclosure.

## DESCRIPTION OF EMBODIMENTS

To make the objective, technical solutions, and advantages of the present disclosure clearer, the technical solutions in the present disclosure are clearly and completely described below with reference to specific embodiments and corresponding accompanying drawings of the present disclosure. It is appreciated that, the described embodiments are some rather than all of the embodiments of the present disclosure. All other embodiments obtained by those of ordinary skill in the art based on the embodiments of the present disclosure without creative efforts should fall within the protection scope of the present disclosure.

The terms used in the embodiments of the present disclosure are only used to explain the specific embodiments of the present disclosure, and are not intended to limit the present disclosure.

To improve transmitting and receiving quality of a Bluetooth signal, an embodiment of the present disclosure provides a method for receiving Bluetooth signal. In the method, a plurality of receive antennas are used to receive signals to obtain a plurality of Bluetooth signals. Then the plurality of obtained Bluetooth signals are converted into a single effective Bluetooth signal.

Further, in an actual application scenario, the plurality of Bluetooth signals can be converted into the single effective Bluetooth signal by using a variety of different manners. To make the converted single Bluetooth signal well meet requirements of the application scenario, in the embodiments of the present disclosure, a received-signal conversion strategy for converting the plurality of Bluetooth signals is created based on a signal quality requirement of the received Bluetooth signal (for example, an signal to noise ratio (SNR) requirement to be met by the received Bluetooth signal).

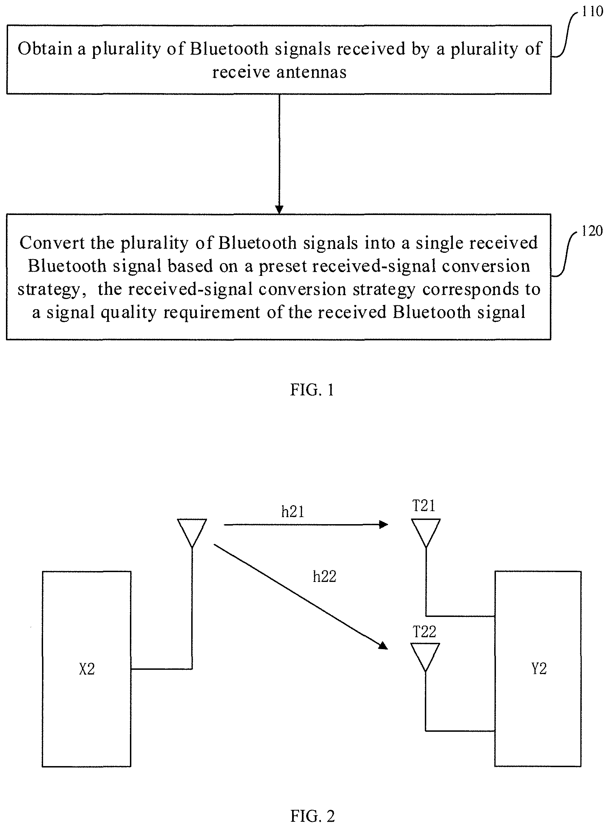

FIG. 1 is a flowchart of executing a method for receiving Bluetooth signal according to an embodiment of the present disclosure. A Bluetooth receiving device (for example, a mobile phone) executes the following method procedure shown in FIG. 1.

S110: Obtain a plurality of Bluetooth signals received by a plurality of receive antennas.
S120: Convert the plurality of Bluetooth signals into a single received Bluetooth signal according to a preset received-signal conversion strategy, the received-signal conversion strategy corresponds to a signal quality requirement of the received Bluetooth signal.

In S110, the plurality of receive antennas may be two or more antennas, and a specific quantity of antennas is determined by an actual requirement of an application scenario, a carrying capacity of the device, and other factors.

Two antennas are used as an example. FIG. 2 is a schematic diagram showing an application scenario of receiving a Bluetooth signal according to an embodiment of the present disclosure. As shown in FIG. 2, a device X2 is a device for transmitting Bluetooth signal, and a device Y2 is a device for receiving Bluetooth signal. The device Y2 has two receive antennas T21 and T22. After the device X2 transmits a Bluetooth signal, the antenna T21 receives a Bluetooth signal L21 on a channel h21, the antenna T22 receives a Bluetooth signal L22 on a channel h22, and the device Y2 converts the Bluetooth signal L21 and the Bluetooth signal L22 into a single signal L2.

Further, in S120, the plurality of Bluetooth signals can be converted into the single received Bluetooth signal in any feasible manner, to meet the signal quality requirement of the received Bluetooth signal.

For example, in an implementation of S120, a maximal ratio combining (MRC) is adopted to meet the signal quality requirement of the received Bluetooth signal by adjusting an allocated combining weight of each received Bluetooth signal in a combining process.

In an embodiment, in an actual application scenario, a common signal quality requirement of the received Bluetooth signal is maximally optimizing an SNR of the received Bluetooth signal. Therefore, in an embodiment of the present disclosure, in S120, a receive antenna i in the plurality of receive antennas corresponds to a channel $h_i$, and a combining weight $u_i$ corresponding to the receive antenna i is calculated based on $h_i$ to optimize the SNR of the received Bluetooth signal, where i = 1, 2, ..., M, and M represents a quantity of receive antennas.

In an embodiment, assuming that a to-be-transmitted signal is x(t), a received Bluetooth signal y(t) obtained after the receiving device performs MRC to combine a plurality of Bluetooth signals is expressed as follows:

$$y(t) = \sum_{i=1}^{M} u_i h_i \, x(t) \quad (1)$$

It is assumed that noise power spectral densities (PSDs) of all the receive antennas are the same and denoted as $N_0$, and that a PSD of the to-be-transmitted signal is $E_x$. An $SNR_{total}$ of the received Bluetooth signal y(t) obtained after the receiving end performs MRC to combine the plurality of Bluetooth signals is expressed as follows:

$$SNR_{total} = \frac{P_{total}}{N_{total}} = \frac{E_x}{N_0} \frac{\left(\sum_{i=1}^{M} u_i h_i\right)^2}{\left(\sum_{i=1}^{M} \|u_i\|^2\right)}$$
$$\leq \frac{E_x}{N_0} \frac{\sum_{i=1}^{M} \|u_i\|^2 \cdot \sum_{i=1}^{M} \|h_i\|^2}{\sum_{i=1}^{M} \|u_i\|^2} = \frac{E_x}{N_0} \sum_{i=1}^{M} \|h_i\|^2 = \sum_{i=1}^{M} \frac{E_x}{N_0} \|h_i\|^2 = \sum_{i=1}^{M} SNR_i \quad (2)$$

In the above formula, $P_{total}$ represents total power of the received signal, and $N_{total}$ represents total noise power.

According to the Cauchy Inequality, when $u_i = h_i^*$, the equality is satisfied. In this case, a value of $SNR_{total}$ is maximum to realize an optimal a diversity gain of the receiving end.

For another example, in an implementation of S120, a selective combining solution may alternatively be adopted to select Bluetooth signals meeting a preset requirement (for example, meeting a single SNR threshold) from the plurality of Bluetooth signals, and perform MRC on the selected Bluetooth signals. For example, it is assumed that the Bluetooth receiving device has four antennas. Two Bluetooth signals with optimal channel quality are selected from four Bluetooth signals received by the four antennas, and the two Bluetooth signals are combined into a single received Bluetooth signal.

Further, in S120, the plurality of Bluetooth signals may alternatively be converted into the single received Bluetooth signal in a manner other than by combining the plurality Bluetooth signals, to meet the signal quality requirement of the received Bluetooth signal.

For example, in an implementation of S120, an antenna selection solution is adopted. In an antenna selection algorithm, based on the signal quality requirement, one or more of the plurality of Bluetooth signals are selected as the received Bluetooth signal (baseband processing signal) for subsequent synchronous demodulation and other operations. In the antenna selection solution, channel estimation is not required. This can reduce an amount of calculation and complexity, thereby reducing a cost.

In an embodiment, in an application scenario, the signal quality requirement of the received Bluetooth signal is selecting a Bluetooth receiving channel with optimal channel quality. In an implementation of S120, based on measured channel values of the plurality of Bluetooth signals, a Bluetooth signal with an optimal measured channel value is selected from the plurality of Bluetooth signals as the received Bluetooth signal. The measured channel values each include but are not limited to a received signal strength indication (RSSI) or a reference signal receiving power (RSRP).

According to the method in this embodiment of the present disclosure, a diversity gain is obtained by using the plurality of antennas to receive the Bluetooth signals, so as to improve receiving quality of the Bluetooth signals, improve performance of a Bluetooth communication system, and increase transmission distances of the Bluetooth signals.

Further, in an actual application scenario, during adaptive frequency hopping (AFH), an RSSI/PER of a combined signal can be directly used as a basis for channel quality evaluation, to improve reliability of channel quality determining. In the Bluetooth system, in AFH, master and slave devices perform frequency hopping to select a channel with "good" quality for communication. These "good" channels do not change greatly in a short time, and can be considered that channel environments are approximately the same. Therefore, an estimation result (for example, channel state information (CSI)) of the receiving channel can be used at a transmitting end to beamform a to-be transmitted signal to obtain a gain of a transmit diversity.

In an embodiment, an embodiment of the present disclosure provides a method for transmitting Bluetooth signal. A to-be-transmitted Bluetooth signal is transmitted by using a plurality of transmit antennas according to a preset to-be-transmitted-signal allocation strategy.

The to-be-transmitted-signal allocation strategy corresponds to a signal quality requirement of a received Bluetooth signal.

The received Bluetooth signal is a received signal calculated by beamforming the to-be-transmitted Bluetooth signal transmitted by the plurality of transmit antennas.

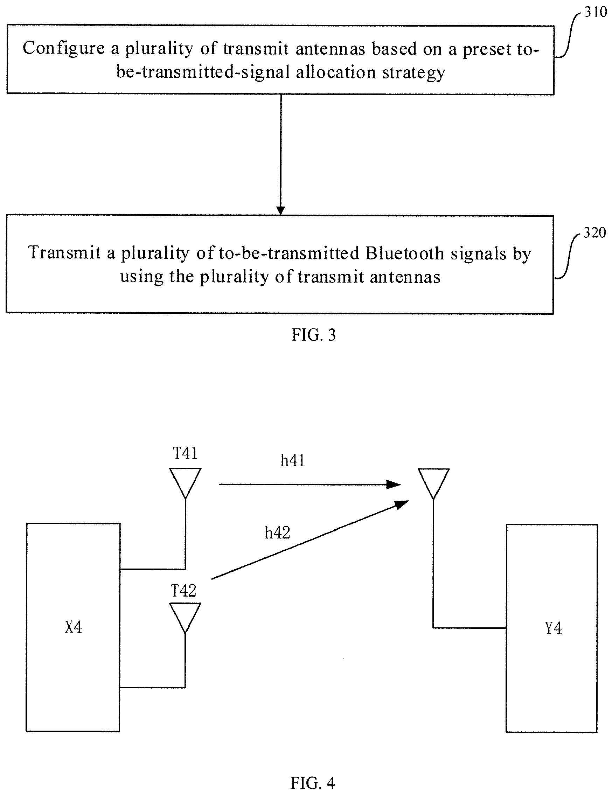

In an embodiment, FIG. 3 is a flowchart of executing a method for transmitting Bluetooth signal according to an embodiment of the present disclosure. A Bluetooth transmitting device (for example, a mobile phone) executes the following method procedure shown in FIG. 3.

S310: Configure a plurality of transmit antennas according to a preset to-be-transmitted-signal allocation strategy.

S320: Transmit a to-be-transmitted Bluetooth signal by using the plurality of transmit antennas.

In S310 and S320:
The to-be-transmitted-signal allocation strategy corresponds to a signal quality requirement of a received Bluetooth signal.

The received Bluetooth signal is a received signal calculated by beamforming the to-be-transmitted Bluetooth signal transmitted by the plurality of transmit antennas.

In S320, the plurality of transmit antennas may be two or more antennas, and a specific quantity of antennas is determined by an actual requirement of an application scenario, a carrying capacity of the device, and other factors.

Two antennas are used as an example. FIG. 4 is a schematic diagram showing an application scenario of transmitting a Bluetooth signal according to an embodiment of the present disclosure. As shown in FIG. 4, a device X4 is a device for transmitting Bluetooth signal, and a device Y4 is a device for receiving Bluetooth signal. The device X4 has two transmit antennas T41 and T42. The antennas T41 and T42 transmit a to-be-transmitted Bluetooth signal based on channels h41 and h42 respectively.

Further, in an actual application scenario, the plurality of transmit antennas can be configured in any feasible to-be-transmitted-signal configuration manner, to meet a signal quality requirement of the to-be-transmitted Bluetooth signal.

In an embodiment of the present disclosure, based on channel corresponding to the plurality of transmit antennas, the to-be-transmitted Bluetooth signal is divided into a plurality of Bluetooth signals corresponding to the plurality of transmit antennas respectively. Transmit power of each transmit antenna is determined based on a signal transmit power setting of the transmitting device and a power allocation weight corresponding to each transmit antenna.

In an embodiment, in an application scenario, the signal quality requirement of the received Bluetooth signal is optimizing an SNR of the received Bluetooth signal; and in S310, a transmit antenna i in the plurality of transmit antennas is configured to transmit the signal based on a power allocation weight $v_i$ ($0 \leq |v_i| \leq 1$), where i = 1, 2, ..., N, and N represents a quantity of transmit antennas; and $V_i$ represents a parameter calculated based on a channel $h_i$ corresponding to the transmit antenna i.

In an embodiment, assuming that a to-be-transmitted signal is x(t), a received signal is expressed as follows:

$$y(t) = \sum_{i=1}^{N} h_i v_i x(t) \quad (3)$$

It is assumed that total average power keeps unchanged before and after beamforming, namely:

$$\sum_{i=1}^{N} \|v_i\|^2 = 1 \quad (4)$$

If a noise PSD of a receiving end is No, and a PSD of the to-be-transmitted signal is $E_x$, an $SNR_{total}$ of the received signal is expressed as follows:

$$SNR_{total} = \frac{P_{total}}{N_{total}} = \frac{E_x}{N_0} \left( \sum_{i=1}^{N} h_i v_i \right)^2$$
$$\leq \frac{E_x \sum_{i=1}^{N} \|h_i\|^2 \sum_{i=1}^{N} \|v_i\|^2}{N_0} = \frac{E_x}{N_0} \sum_{i=1}^{N} \|h_i\|^2 = \sum_{i=1}^{N} \frac{E_x}{N_0} \|h_i\|^2 = \sum_{i=1}^{N} SNR_i \quad (5)$$

With reference to conditions for satisfying the equalities in the formulas (4) and (5), it can be deduced that: when

$$v_i = \frac{(h_i)^*}{\sqrt{\sum_{i=1}^{N} \|(h_i)^*\|^2}} \quad (6),$$

a power requirement of the transmitting end can be met and an $SNR_{total}$ of the receiving end reaches a maximum, to realize a diversity gain of the transmitting end.

In an embodiment, in another application scenario, the signal quality requirement of the received Bluetooth signal is optimizing a channel capacity of the received Bluetooth signal; and in S310, the plurality of transmit antennas are configured to transmit the signal based on a power allocation matrix $\Lambda_Q$.

The power allocation matrix $\Lambda_Q$ represents a parameter calculated based on a covariance matrix Q of the received Bluetooth signal.

In an embodiment, a channel capacity C of a system can be expressed as follows:

$$C = max \left( E \left\{ log_2 det \left( I_M + \frac{1}{\sigma^2} HQH^H \right) \right\} \right) \ bps/Hz$$
$$s.t. \ tr(Q) \leq P \quad (7).$$

In the above formula, $Q = E\{xx^H\}$ represents a covariance matrix of a signal at the receiving end; M represents a quantity of antennas (1 herein); $\sigma^2$ represents a noise variance, P represents power of the to-be-transmitted signal; H represents a channel matrix; $H = UDV^H$ can be obtained by performing singular value decomposition (SVD) on H. When $Q = V\Lambda_Q V^H$, the channel capacity can reach a maximum, and the corresponding matrix $\Lambda_Q$ is a solution of channel capacity maximization, and physically indicates power allocation of the transmit antenna.

Further, in an actual application scenario, the to-be-transmitted-signal allocation strategy may alternatively be realized by using another solution. For example, a gain of a multi-antenna transmit diversity can be realized by using a precoding method (similar to a multi-antenna precoding matrix in long term evolution (LTE)) or by using a method in which an analog end controls an antenna emission angle based on a channel.

According to the method in embodiments of the present disclosure, a diversity gain is obtained by using the plurality of antennas to transmit the Bluetooth signal, so as to improve transmitting quality of the Bluetooth signal, improve performance of a Bluetooth communication system, and increase a transmission distance of the Bluetooth signal. The diversity methods used in the present disclosure do not need to modify an existing protocol standard, and can match an existing Bluetooth device, thereby greatly reducing an implementation difficulty (for example, if space time block coding (STBC) or another method is adopted, some protocol standards need to be modified, and it is difficult to match the existing Bluetooth device).

It can be understood that some or all of the steps or operations in the above embodiments are only examples, and other operations or variants of various operations can further be performed in the embodiments of the present disclosure. In addition, the steps may be performed in different orders presented in the above embodiments, and not all the operations in the above embodiments need to be performed.

In the 1990s, a technological improvement can be clearly defined as hardware improvement (for example, an improvement of a circuit structure such as a diode, a transistor, or a switch) or software improvement (for example, an improvement of a method procedure). However, with the development of technologies, improvements of many method procedures can be regarded as direct improvements of hardware circuit structures. Almost all designers obtain a corresponding hardware circuit structure by programming an improved method procedure into a hardware circuit. Therefore, it is not meant that an improvement of a method procedure cannot be realized by using a hardware entity module. For example, a programmable logic device (PLD) (such as a field programmable gate array (FPGA)) is such an integrated circuit, and its logic function is determined by programming the device by an access party. A designer can "integrate" a digital apparatus onto a PLD through programming, without requiring a chip manufacturer to design and manufacture a special integrated circuit chip. Nowadays, this kind of programming replaces manual manufacturing of an integrated circuit chip and is mostly realized by using a "logic compiler". The logic compiler is similar to a software compiler used to develop and compile a program, and original code before compilation needs to be compiled in a specific programming language that is referred to as a hardware description language (HDL) herein. There are many kinds of HDLs, such as an advanced Boolean expression language (ABEL), an alternate hardware description language (AHDL), Confluence, a Cornell university programming language (CUPL), HDCal, a Java hardware description language (JHDL), Lava, Lola, MyHDL, PALASM, and a Ruby hardware description language (RHDL). At present, a very-high-speed integrated circuit hardware description language (VHDL) and Verilog are most commonly used. It should be understood by a person skilled in the art that a hardware circuit of a logic method procedure can be easily obtained by using the above hardware description languages to perform logic programming on the method procedure and programming the method procedure into an integrated circuit.

Therefore, the present disclosure further provides an apparatus for receiving Bluetooth signal. The apparatus is installed in a Bluetooth communication device (for example, a mobile phone). The apparatus includes: a signal obtaining module configured to obtain a plurality of Bluetooth signals received by a plurality of receive antennas; and a signal conversion module configured to convert the plurality of Bluetooth signals into a single received Bluetooth signal according to a preset received-signal conversion strategy. The received-signal conversion strategy corresponds to a signal quality requirement of the received Bluetooth signal.

According to the method for transmitting Bluetooth signal in the present disclosure, the present disclosure further provides an apparatus for receiving Bluetooth signal. The apparatus is installed in a Bluetooth communication device (for example, a mobile phone). The apparatus includes: a transmission configuration module configured to configure a plurality of transmit antennas according to a preset to-be-transmitted-signal allocation strategy, such that the plurality of transmit antennas transmit a to-be-transmitted Bluetooth signal. The to-be-transmitted-signal allocation strategy corresponds to a signal quality requirement of a received Bluetooth signal. The received Bluetooth signal is a received signal calculated by beamforming the Bluetooth signal transmitted by the plurality of transmit antennas.

Each of the plurality of transmit antennas transmits one of a plurality of Bluetooth signals.

In an embodiment, the apparatuses proposed in the present disclosure may be fully or partially integrated into a physical entity or may be physically separate. These modules may be all implemented in a form of software through processing element calling; may be all implemented in a form of hardware; or may be partially implemented in a form of software through processing element calling, and partially implemented in a form of hardware. For example, a detection module may be a separate processing element or integrated into a chip of an electronic device. Implementation of other modules is similar. In addition, all or part of these modules may be integrated or implemented independently. During the implementation, each step or module of the above methods may be implemented by an integrated logic circuit of hardware in a processing element or by using an instruction in a form of software.

For example, the above modules may be one or more integrated circuits configured to implement the above methods, such as one or more application specific integrated circuits (ASICs), one or more digital signal processors (DSPS), or one or more field programmable gate arrays (field programmable gate array, FPGA). For another example, these modules may be integrated and implemented in a form of a system-on-a-chip (SOC).

An embodiment of the present disclosure provides an electronic chip (a Bluetooth communication chip or a communication chip integrating Bluetooth communication). The electronic chip is installed in a Bluetooth communication device (for example, a mobile phone), and includes: a processor, configured to execute a computer program instruction stored in a memory. When the computer program instruction is executed by the processor, the electronic chip is triggered to execute a procedure of the method for receiving Bluetooth signal described in the embodiments of the present disclosure.

An embodiment of the present disclosure provides an electronic chip (a Bluetooth communication chip or a communication chip integrating Bluetooth communication). The electronic chip is installed in a Bluetooth communication device (for example, a mobile phone), and includes: a processor, configured to execute a computer program instruction stored in a memory. When the computer program instruction is executed by the processor, the electronic chip is triggered to execute a procedure of the method for transmitting Bluetooth signal described in the embodiments of the present disclosure.

An embodiment of the present disclosure provides an electronic device (for example, a mobile phone). The electronic device includes a plurality of receive antennas, a memory configured to store a computer program instruction, and a processor configured to execute the program instruction. When the computer program instruction is executed by the processor, the electronic device is triggered to execute a procedure of the method for receiving Bluetooth signal described in the embodiments of the present disclosure.

An embodiment of the present disclosure provides an electronic device (for example, a mobile phone). The electronic device includes a plurality of transmit antennas, a memory configured to store a computer program instruction, and a processor configured to execute the program instruction. When the computer program instruction is executed by the processor, the electronic device is triggered to execute a procedure of the method for transmitting Bluetooth signal described in the embodiments of the present disclosure.

In an embodiment of the present disclosure, the one or more computer programs are stored in the memory, and the one or more computer programs include instructions. When the instructions are executed by the device, the device is enabled to perform steps of the methods described in the embodiments of the present disclosure.

In an embodiment of the present disclosure, the processor of the electronic device may be an SOC. The processor may include a central processing unit (CPU), and may further include a processor of another type. In an embodiment, in an embodiment of the present disclosure, the processor of the electronic device may be a PWM control chip.

In an embodiment of the present disclosure, the processor may include, for example, a CPU, a DSP, a microcontroller, or a digital signal processor, and may further include a GPU, an embedded neural network processing unit (NPU), and an image signal processor (ISP). The processor may further include a necessary hardware accelerator, a logic processing hardware circuit such as an ASIC, or one or more integrated circuits for controlling the execution of the program of the technical solutions of the present disclosure. In addition, the processor may have a function of operating one or more software programs, and the software program may be stored in a storage medium.

In an embodiment of the present disclosure, the memory of the electronic device may be a read-only memory (ROM), another type of static storage device that can store static information and instructions, a random access memory (RAM), or another type of dynamic storage device that can store information and instructions; may be an electrically erasable programmable read-only memory (EEPROM), a compact disc read-only memory (CD-ROM), another optical disc storage, an optical disc storage (including a compact disc, a laser disc, an optical disc, a digital versatile disc, or a Blu ray disc), a disk storage medium, or another magnetic storage device; or may be any computer-readable medium that can be used to carry or store desired program code in a form of an instruction or a data structure and can be accessed by a computer.

In an embodiment of the present disclosure, the processor and the memory may be integrated into a processing apparatus. More generally, the processor and the memory are independent components. The processor is configured to execute the program code stored in the memory to implement the methods described in the embodiments of the present disclosure. During specific implementation, the memory may alternatively be integrated into the processor or independent of the processor.

Further, the devices, apparatus, and modules described in the embodiments of the present disclosure may be specifically implemented by a computer chip or entity, or implemented by a product with a specific function.

Those skilled in the art should understand that the embodiments of the present disclosure may be provided as a method, an apparatus, or a computer program product. Therefore, the present disclosure may use a form of hardware only embodiments, software only embodiments, or embodiments with a combination of software and hardware. Moreover, the present disclosure may be in a form of a computer program product that is implemented on one or more computer-usable storage media that include computer-usable program code.

In the embodiments provided in the present disclosure, if implemented in a form of a software functional unit and sold or used as a stand-alone product, any function may be stored in a computer-readable storage medium. Based on this understanding, the technical solutions of the present disclosure essentially, or a part contributing to the related art, or a part of the technical solutions may be embodied in a form of a software product. The computer software product is stored in a storage medium, and includes several instructions to enable a computer device (which may be a personal computer, a server, a network device, or the like) to perform all or some steps of the methods described in the embodiments of the present disclosure.

An embodiment of the present disclosure provides a computer-readable storage medium. The computer-readable storage medium stores a computer program. When the computer program runs on a computer, the computer executes the methods provided in the embodiments of the present disclosure.

An embodiment of the present disclosure provides a computer program product. The computer program product includes a computer program. When the computer program runs on a computer, the computer executes of the methods provided in the embodiments of the present disclosure.

The embodiments of the present disclosure are described with reference to the flowcharts and/or block diagrams of the method, the device (apparatus), and the computer program product according to the embodiments of the present disclosure. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of another programmable data processing device to generate a machine, such that the instructions executed by a computer or a processor of another programmable data processing device generate an apparatus for implementing a specific function in one or more processes in the flowcharts and/or in one or more blocks in the block diagrams.

These computer program instructions may be stored in a computer readable memory that can instruct the computer or any other programmable data processing device to work in a specific manner, such that the instructions stored in the computer readable memory generate an artifact that includes an instruction apparatus. The instruction apparatus implements a specific function in one or more processes in the flowcharts and/or in one or more blocks in the block diagrams.

These computer program instructions may be loaded onto a computer or another programmable data processing device, such that a series of operations and steps are performed on the computer or another programmable device, thereby generating computer-implemented processing. Therefore, the instructions executed on the computer or another programmable device provide steps for implementing a specific function in one or more processes in the flowcharts and/or in one or more blocks in the block diagrams.

It should be noted that, in the embodiments of the present disclosure, the term "at least one" refers to one or more, and the term "a plurality of" refers to two or more. The term "and/or" describes associations between associated objects, and it indicates three types of relationships. For example, "A and/or B" may indicate that A exists alone, A and B coexist, or B exists alone. "A" and "B" each may be singular or plural. The character "/" generally indicates that the associated objects are in an "or" relationship. The term "at least one of the followings" or a similar expression refers to any combination of these items, including any combination of single items or plural items. For example, at least one of a, b and c may represent: a, b, c, a and b, a and c, or b and c, where a, b and c may be singular or plural.

In addition, terms "include", "comprise", or any other variations thereof are intended to cover non-exclusive inclusion, such that a process, method, product, or device including a series of elements not only includes those elements, but also includes other elements that are not explicitly listed, or also includes inherent elements of the process, method, product, or device. Without more restrictions, an element defined by the phrase "including a ..." does not exclude the presence of another same element in a process, method, product, or device that includes the element.

The present disclosure may be described in general contexts of computer executable instructions executed by a computer, such as a program module. Generally, the program module includes a routine, a program, an object, a component, a data structure, and the like that perform specific tasks or implement specific abstract data types. The present disclosure may alternatively be practiced in a distributed computing environment in which a task is performed by a remote processing device connected through a communication network. In the distributed computing environment, the program module may be located in local and remote computer storage media including a storage device.

The embodiments in the present disclosure are described in a progressive manner. For same or similar parts between the embodiments, reference may be made to each other. Each embodiment focuses on a difference from other embodiments. For an apparatus embodiment, since it is basically similar to the method embodiment, the description is relatively simple, and reference can be made to the description of the method embodiment.

Those of ordinary skill in the art may be aware that units and algorithm steps described in the embodiments of the present disclosure can be implemented by electronic hardware or a combination of computer software and electronic hardware. Whether these functions are implemented by using hardware or software depends on specific applications and design constraints of the technical solutions. A person skilled in the art may use different methods to implement the described functions for each specific application, but such implementation should not be considered to be beyond the scope of the present disclosure.

A person skilled in the art can clearly understand that, for convenience and brevity of description, reference may be made to corresponding processes in the foregoing method embodiment for specific working processes of the foregoing apparatuses and units. Details are not described herein again.

The above merely describes specific implementations of the present disclosure. Any person skilled in the art can easily conceive modifications or replacements within the technical scope of the present disclosure, and these modifications or replacements shall fall within the protection scope of the present disclosure. Therefore, the protection scope of the present disclosure should be subject to the protection scope of the claims.

**Claims**

1. A method for receiving Bluetooth signal, comprising:

   obtaining (110) a plurality of Bluetooth signals received by a plurality of receive antennas; and
   converting (120) the plurality of Bluetooth signals into a single received Bluetooth signal based on a preset received-signal conversion strategy, wherein the received-signal conversion strategy corresponds to a signal quality requirement of the received Bluetooth signal.

2. The method according to claim 1, wherein the signal quality requirement of the received Bluetooth signal includes optimizing a signal-noise ratio (SNR) of the received Bluetooth signal; and
   said converting (120) the plurality of Bluetooth signals into a single received Bluetooth signal according to a preset received-signal conversion strategy comprises:

   obtaining the received Bluetooth signal by performing maximum ratio combining (MRC) to the plurality of Bluetooth signals,
   wherein in the MRC, a receive antenna i in the plurality of receive antennas corresponds to a channel $h_i$, and a combining weight $u_i$ corresponding to the receive antenna i is calculated based on $h_i$ to optimize the SNR of the received Bluetooth signal, where i = 1, 2, ..., M, and M represents a quantity of receive antennas.

3. The method according to claim 1, wherein the signal quality requirement of the received Bluetooth signal includes selecting a Bluetooth signal receiving channel having optimal channel quality; and
   said converting (120) the plurality of Bluetooth signals into a single received Bluetooth signal based on a preset received-signal conversion strategy comprises:
   selecting one of the plurality of Bluetooth signals as the received Bluetooth signal based on measured channel values of the plurality of Bluetooth signals, wherein the measured channel values each comprise a received signal strength indicator (RSSI) or reference signal received power (RSRP).

4. A method for transmitting Bluetooth signal, comprising:

   transmitting (320) a plurality of to-be-transmitted Bluetooth signals by using a plurality of transmit antennas based on a preset to-be-transmitted-signal allocation strategy,
   wherein the to-be-transmitted-signal allocation strategy corresponds to a signal quality requirement of a received Bluetooth signal; and
   the received Bluetooth signal is a received signal calculated by beamforming the plurality of to-be-transmitted Bluetooth signals transmitted by the plurality of transmit antennas.

5. The method according to claim 4, wherein the signal quality requirement of the received Bluetooth signal includes optimizing an SNR of the received Bluetooth signal; and

   said transmitting (320) a plurality of to-be-transmitted Bluetooth signals by using a plurality of transmit antennas based on a preset to-be-transmitted-signal allocation strategy comprises: configuring a transmit antenna i in the plurality of transmit antennas to transmit the plurality of to-be-transmitted Bluetooth signals based on a power allocation weight $v_i$,
   where i = 1, 2, ..., N, and N represents a quantity of transmit antennas; and
   $V_i$ represents a parameter calculated based on a channel $h_i$ corresponding to the transmit antenna i.

6. The method according to claim 4, wherein the signal quality requirement of the received Bluetooth signal includes optimizing a channel capacity of the received Bluetooth signal; and

   said transmitting (320) a plurality of to-be-transmitted Bluetooth signals by using a plurality of transmit antennas based on a preset to-be-transmitted-signal allocation strategy comprises: configuring the plurality of transmit antennas to transmit the plurality of to-be-transmitted Bluetooth signals based on a power allocation matrix $\Lambda_Q$, wherein the power allocation matrix $\Lambda_Q$ represents a parameter calculated based on a covariance matrix $Q$ of the received Bluetooth signal.

7. An apparatus for receiving Bluetooth signal, comprising:

   at least one processor; and
   a memory configured to store instructions executable by the at least one processor;
   wherein the instructions cause the at least one processor to: obtain a plurality of Bluetooth signals received by a plurality of receive antennas; and
   convert the plurality of Bluetooth signals into a single received Bluetooth signal based on a preset received-signal conversion strategy,
   wherein the received-signal conversion strategy corresponds to a signal quality requirement of the received Bluetooth signal.

8. The apparatus according to claim 7, wherein the preset received-signal conversion strategy includes optimizing a signal-noise ratio (SNR) of the received Bluetooth signal, and the at least one processor is further configured to:

   obtain the received Bluetooth signal by performing maximum ratio combining (MRC) to the plurality of Bluetooth signals,
   wherein in the MRC, a receive antenna i in the plurality of receive antennas corresponds to a channel $h_i$, and a combining weight $u_i$ corresponding to the receive antenna i is calculated based on $h_i$ to optimize the SNR of the received Bluetooth signal, where i = 1, 2, ..., M, and M represents a quantity of receive antennas, or
   wherein the signal quality requirement of the received Bluetooth signal includes selecting a Bluetooth signal receiving channel having optimal channel quality, and the at least one processor is further configured to:

      select one of the plurality of Bluetooth signals as the received Bluetooth signal based on measured channel values of the plurality of Bluetooth signals,
      wherein the measured channel values each comprise a received signal strength indicator (RSSI) or reference signal received power (RSRP).

9. An apparatus for receiving Bluetooth signal, comprising:

   at least one processor; and
   a memory configured to store instructions executable by the at least one processor;
   wherein the instructions cause the at least one processor to transmit, by a plurality of transmit antennas, a plurality of to-be-transmitted Bluetooth signals by configuring the plurality of transmit antennas based on a preset to-be-transmitted-signal allocation strategy,
   wherein the to-be-transmitted-signal allocation strategy corresponds to a signal quality requirement of a received Bluetooth signal; and
   the received Bluetooth signal is a received signal calculated by beamforming the plurality of to-be-transmitted Bluetooth signals transmitted by the plurality of transmit antennas.

10. The apparatus according to claim 9, wherein the signal quality requirement of the received Bluetooth signal includes optimizing an SNR of the received Bluetooth signal, and the at least one processor is further configured to:

    configure a transmit antenna i in the plurality of transmit antennas to transmit the plurality of to-be-transmitted Bluetooth signals based on a power allocation weight $v_i$,
    where i = 1, 2, ..., N, and N represents a quantity of transmit antennas; and
    $V_i$ represents a parameter calculated based on a channel $h_i$ corresponding to the transmit antenna i, or
    wherein the signal quality requirement of the received Bluetooth signal includes optimizing a channel capacity of the received Bluetooth signal, and the at least one processor is further configured to:

       configure the plurality of transmit antennas to transmit the plurality of to-be-transmitted Bluetooth signals based on a power allocation matrix $\Lambda_{\boldsymbol{Q}}$,
       wherein the power allocation matrix $\Lambda_{\boldsymbol{Q}}$ represents a parameter calculated based on a covariance matrix $Q$ of the received Bluetooth signal.

11. An electronic chip, comprising:

    at least one processor; and
    a memory configured to store instructions executable by the at least one processor;

wherein when the instructions are executed by the at least one processor, the electronic chip is triggered to execute the method according to any one of claims 1 to 3.

12. An electronic chip, comprising:

   at least one processor; and
   a memory configured to store instructions executable by the at least one processor;
   wherein when the instructions are executed by the at least one processor, the electronic chip is triggered to execute the method according to any one of claims 4 to 6.

13. An electronic device, comprising:

   a plurality of receive antennas,
   a memory configured to store computer programming instructions, and
   at least one processor configured to execute the programming instructions, wherein when the computer program instructions are executed by the at least one processor, the electronic device is triggered to perform the method according to any one of claims 1 to 3.

14. An electronic device, comprising:

   a plurality of transmit antennas,
   a memory configured to store computer programming instructions, and
   at least one processor configured to execute the programming instructions, wherein when the computer program instructions are executed by the at least one processor, the electronic device is triggered to perform the method according to any one of claims 4 to 6.

15. A non-transitory computer-readable storage medium, wherein the computer-readable storage medium stores computer programming instructions thereon, the computer program instructions, when being executed by at least one processor, are configured to execute the method according to any one of claims 1 to 6.

Obtain a plurality of Bluetooth signals received by a plurality of receive antennas 〜110

Convert the plurality of Bluetooth signals into a single received Bluetooth signal based on a preset received-signal conversion strategy, the received-signal conversion strategy corresponds to a signal quality requirement of the received Bluetooth signal 〜120

FIG. 1

h21 → T21

h22

T22

X2

Y2

FIG. 2

Configure a plurality of transmit antennas based on a preset to-be-transmitted-signal allocation strategy

310

Transmit a plurality of to-be-transmitted Bluetooth signals by using the plurality of transmit antennas

320

FIG. 3

T41

h41

h42

T42

X4

Y4

FIG. 4

**European Patent Office**
Europäisches Patentamt
European Patent Office
Office européen des brevets

# EUROPEAN SEARCH REPORT

Application Number

EP 22 15 3955

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2010/330946 A1 (AKKARAKARAN SONY J [US] ET AL) 30 December 2010 (2010-12-30) * paragraph [0030] - paragraph [0083]; figures 1-10 * | 1-15 | INV. H04B7/08 H04B1/40 |
| X | US 2017/093465 A1 (MOLEV SHTEIMAN ARKADY [US] ET AL) 30 March 2017 (2017-03-30) * the whole document * | 1-15 | |
| X | WO 2016/010770 A1 (QUALCOMM INC [US]) 21 January 2016 (2016-01-21) * the whole document * | 1-15 | |
| X | WO 2007/038694 A1 (QUALCOMM INC [US]; LI LINBO [US] ET AL.) 5 April 2007 (2007-04-05) * paragraph [0007] * * paragraph [0034] - paragraph [0055]; figures 4-10 * | 1-15 | |
| X | CN 101 345 567 A (CHENGDU JIUZHOU ELECTRIC INFOR [CN]) 14 January 2009 (2009-01-14) * the whole document * | 1-3,7,8, 11,13,15 | TECHNICAL FIELDS SEARCHED (IPC) |
| X | CN 103 281 097 A (SHENZHEN WISSEA ELECTRONIC SCIENCE & TECHNOLOGY CO LTD) 4 September 2013 (2013-09-04) * the whole document * | 4-6,9, 11,14,15 | H04B |
| A | EP 3 087 682 A1 (ERICSSON TELEFON AB L M [SE]) 2 November 2016 (2016-11-02) * the whole document * | 1-15 | |
| A | US 2012/027054 A1 (PALANKI RAVI [US] ET AL) 2 February 2012 (2012-02-02) * the whole document * | 1-15 | |

The present search report has been drawn up for all claims

| Place of search | Date of completion of the search | Examiner |
|---|---|---|
| Munich | 17 June 2022 | Ayala Perriello, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 15 3955

This annex lists the patent family members relating to the patent documents cited in the above-mentioned European search report.
The members are as contained in the European Patent Office EDP file on
The European Patent Office is in no way liable for these particulars which are merely given for the purpose of information.

17-06-2022

| Patent document cited in search report | | Publication date | Patent family member(s) | | Publication date |
|---|---|---|---|---|---|
| US 2010330946 | A1 | 30-12-2010 | TW | 201126946 A | 01-08-2011 |
| | | | US | 2010330946 A1 | 30-12-2010 |
| | | | WO | 2011005564 A2 | 13-01-2011 |
| US 2017093465 | A1 | 30-03-2017 | US | 2017093465 A1 | 30-03-2017 |
| | | | WO | 2017054713 A1 | 06-04-2017 |
| WO 2016010770 | A1 | 21-01-2016 | US | 9197264 B1 | 24-11-2015 |
| | | | WO | 2016010770 A1 | 21-01-2016 |
| WO 2007038694 | A1 | 05-04-2007 | AR | 059115 A1 | 12-03-2008 |
| | | | CN | 101313490 A | 26-11-2008 |
| | | | EP | 1929665 A1 | 11-06-2008 |
| | | | JP | 2009510928 A | 12-03-2009 |
| | | | KR | 20080054403 A | 17-06-2008 |
| | | | KR | 20100067692 A | 21-06-2010 |
| | | | TW | 200731695 A | 16-08-2007 |
| | | | US | 2007071149 A1 | 29-03-2007 |
| | | | US | 2007115801 A1 | 24-05-2007 |
| | | | US | 2015003380 A1 | 01-01-2015 |
| | | | WO | 2007038694 A1 | 05-04-2007 |
| CN 101345567 | A | 14-01-2009 | NONE | | |
| CN 103281097 | A | 04-09-2013 | NONE | | |
| EP 3087682 | A1 | 02-11-2016 | EP | 3087682 A1 | 02-11-2016 |
| | | | US | 2017033849 A1 | 02-02-2017 |
| | | | WO | 2015096846 A1 | 02-07-2015 |
| US 2012027054 | A1 | 02-02-2012 | US | 2012027054 A1 | 02-02-2012 |
| | | | WO | 2012018743 A2 | 09-02-2012 |
| | | | WO | 2012018769 A1 | 09-02-2012 |

EPO FORM P0459

For more details about this annex : see Official Journal of the European Patent Office, No. 12/82